# EUROPEAN PATENT SPECIFICATION

(11) **EP 2 927 724 B1**
(45) Date of publication and mention of the grant of the patent: **08.02.2017**
(21) Application number: 14163374.3
(22) Date of filing: 03.04.2014
(51) Int. Cl.: G02B 6/44

(54) **Fiber optic distribution device**
Glasfaserverteilungsvorrichtung
Dispositif de distribution à fibre optique

(43) Date of publication of application: 07.10.2015
(73) Proprietor: CCS Technology, Inc., Wilmington, DE 19803 (US)
(72) Inventor: Müller, Michael, 58706 Menden (DE); Müller, Thorsten, 58708 Menden (DE); Schreiber, Sebastian, 13055 Berlin (DE); Malolepszy, Bartosz, 92-508 Lodz (PL); Strunck, Sven, 13129 Berlin (DE); Jedrzejka, Kamil, 92-504 Lodz (PL); Fabrykowski, Grzegorz, 95-010 Strykow (PL)
(74) Representative: Sturm, Christoph

(56) References cited:
- EP-A1- 2 629 128
- WO-A2-2012/106447
- US-A1- 2007 189 691
- US-A1- 2008 310 810
- US-A1- 2011 285 265

## Description

The present patent application relates to a fiber optic distribution device comprising at least one fiber optic management unit.

When designing data transmission networks comprising optical fibers, it is necessary to handle optical fibers, especially to connect optical fibers to one another. Junctions between optical fibers can be provided by patch connections and splice connections. Such junctions need to be handled both outside buildings and inside buildings. Outside buildings, junctions between optical fibers are accommodated in so called cable sleeves or street cabinets. Inside buildings, junctions between optical fiber are handled in so called distribution cabinets or distribution frames. So called wall boxes are used for the handling of junctions between optical fibers both outside buildings and inside buildings.

DE 20 2005 019 319 U1 discloses a fiber optic distribution device designed as a street cabinet. The street cabinet according to DE 20 2005 019 319 U1 comprises a housing defining an interior space of the street cabinet, wherein at least one fiber optic cable can be inserted from an exterior into the interior space of the housing and passed out from the interior space of the housing in the exterior. A fiber optic management unit is mounted in the housing, wherein the fiber optic management unit comprises a back wall carrying over-length handling elements and a front wall hinged to the back wall carrying splice trays and strain relief elements.

WO2012/106447 discloses a distribution device with a housing and a modular fiber optic management unit that can be pivoted around a vertical rotation axis.

The present application is based on the object to provide a novel fiber optic distribution device suitable for handling optical fibers both outside buildings and inside buildings, the fiber optic distribution device being modular, scalable on demand and providing good access to the optical fibers and fiber connections handled in the fiber optic distribution device. The fiber optic distribution device according to the present patent application is defined in claim 1.

The fiber optic distribution device comprises a housing defining an interior space of the fiber optic distribution device, wherein at least one fiber optic cable can be inserted from an exterior into the interior space of the housing and passed out from the interior space of the housing in the exterior. The fiber optic distribution device comprises further at least one modular fiber optic management unit mounted in the housing. The or each modular fiber optic management unit comprises several modules stacked above each other, namely at least a cable entry module for inserting at least one incoming fiber optic cable from the interior space of the housing into the respective fiber optic management unit and for passing out least one outgoing fiber optic cable from the respective fiber optic management unit in the interior space of the housing; and at least one splice module comprising several splice trays for handling splice connections between fibers of the or each incoming fiber optic cable and fibers of fiber optic pigtails or fibers of the or each outgoing fiber optic cable; and preferably at least one patch module comprising a patch field having several fiber optic adapters for handling patch connections between fibers of the fiber optic pigtails and fibers of the or each outgoing fiber optic cable. The or each fiber optic management unit is mounted on mounting rails in such a way that the respective fiber optic management unit having a first orientation in an upright position of the same can be horizontally pulled out from the interior space of the housing and horizontally pushed into the interior space of the housing in said first orientation; and that the respective fiber optic management unit being pulled out from the interior space of the housing can be pivoted around a vertical rotation axis from said first orientation into a second orientation and vice versa from said second orientation into the first orientation while maintaining the upright position of the respective fiber optic management unit.

The fiber optic distribution device of the present application is at the same time modular, scalable on demand and provides good access to the optical fibers and fiber connections handled in the fiber optic distribution device. The fiber optic distribution device gives the flexibility to upgrade existing networks for new applications, like vectoring. It consists of modular fiber optic management units which can be configured individually according to the relevant needs or according to the available size of the interior space of the housing of the fiber optic distribution device. The mounting rails provide a slide-in/slide-out mechanism providing excellent access to the optical fibers for the field installation.

The fiber optic distribution device of the present application provides higher fiber capacity than current products. The fiber optic distribution device provides higher versatility and flexibility. The fiber optic distribution device provides a modular design to match different configurations and sizes. The fiber optic distribution device can be provided with factory pre-configured fiber optic management units or can be configured in the field.

According to a preferred embodiment, the or each fiber optic management unit comprises a top side, a bottom side, two opposite long sides and two opposite narrow sides. At least one first mounting rail is attached to one of the long sides of the respective fiber optic management unit. Preferably, at least one second mounting rail is attached to the bottom side or to said long side of the respective fiber optic management unit. In the first orientation of the upright position of the respective fiber optic management unit the opposite long sides of the respective fiber optic management unit run parallel to the mounting rails and thereby parallel to the direction in which the respective fiber optic management unit can be horizontally pulled out from the interior space of the housing and horizontally pushed into the interior space of the housing. In the second orientation of the upright position of the respective fiber optic management unit the opposite long sides of the respective fiber optic management unit run perpendicular to the mounting rails and thereby perpendicular to the slide-in/slide-out direction defined by the mounting rails. This provides excellent access to the optical fibers and fiber connections handled in the fiber optic distribution device.

Preferably, the or each first mounting rail comprises a first hinge and the or each second mounting rail comprises a second hinge. The or each first hinge and the or each second hinge define the vertical rotation axis for pivoting the respective fiber optic management unit between the first orientation of the upright position and the second orientation of the upright position when the fiber optic management unit is pulled out from the interior space of the housing. This provides excellent access to the optical fibers and fiber connections handled in the fiber optic distribution device.

According to a preferred embodiment, the cable entry module provides a top module of the respective fiber optic management unit, the or each splice module is positioned below the cable entry module, and the or each patch module is positioned below the or each splice module.

The cable entry module of the respective fiber optic management unit comprises a back wall carrying strain relief elements and fiber guide elements, a top wall carrying an over-length storage tray, and at least one side wall. The or each splice module of the respective fiber optic management unit comprises a back wall carrying the splice trays, and hinged side walls. At least one of said hinged side walls provides over-length storage for the or each outgoing fiber optic cable. The or each patch module of the respective fiber optic management unit comprises a back wall carrying the fiber optic adapters, strain relief elements and fiber guide elements, and at least one side wall. The modules of the respective fiber optic management unit being positioned above each other are connected at their back walls. Such a fiber optic management unit is at the same modular, scalable on demand and provides good access to optical fibers and fiber connections.

Embodiments of the fiber optic distribution device are given in the dependent claims and the description below. Exemplary embodiments will be explained in more detail with reference to the drawing, in which:
- Figure 1a: shows a fiber optic distribution device comprising a housing and one fiber optic management unit being pushed in the housing in a first perspective view;
- Figure 1b: shows the fiber optic distribution device of Figure 1a with the fiber optic management being pushed in the housing in a second perspective view;
- Figure 1c: shows the fiber optic distribution device of Figure 1b with the fiber optic management being pulled out the housing in the second perspective view;
- Figure 1d: shows the fiber optic distribution device of Figure 1c with the fiber optic management being pulled out the housing and being pivoted around a vertical axis in the second perspective view;
- Figure 2a: shows a detail of the fiber optic distribution device of Figure 1a, namely the fiber optic management unit of the same;
- Figure 2b: shows a detail of the fiber optic distribution device of Figure 1b, namely the fiber optic management unit of the same;
- Figure 2c: shows a detail of the fiber optic distribution device of Figure 1c, namely the fiber optic management unit of the same;
- Figure 2d: shows a detail of thee fiber optic distribution device of Figure 1d, namely the fiber optic management unit of the same;
- Figure 3a: shows the fiber optic management unit in an opened status;
- Figure 3b: shows the fiber optic management unit of Figure 3a in a perspective view;
- Figure 4: shows a cable entry module of the fiber optic management unit;
- Figure 5a: shows a splice module of the fiber optic management unit in a first status;
- Figure 5b: shows the splice module in a second status;
- Figure 6: shows a patch module of the fiber optic management unit; and
- Figure 7: shows a WDM module of the fiber optic management unit.

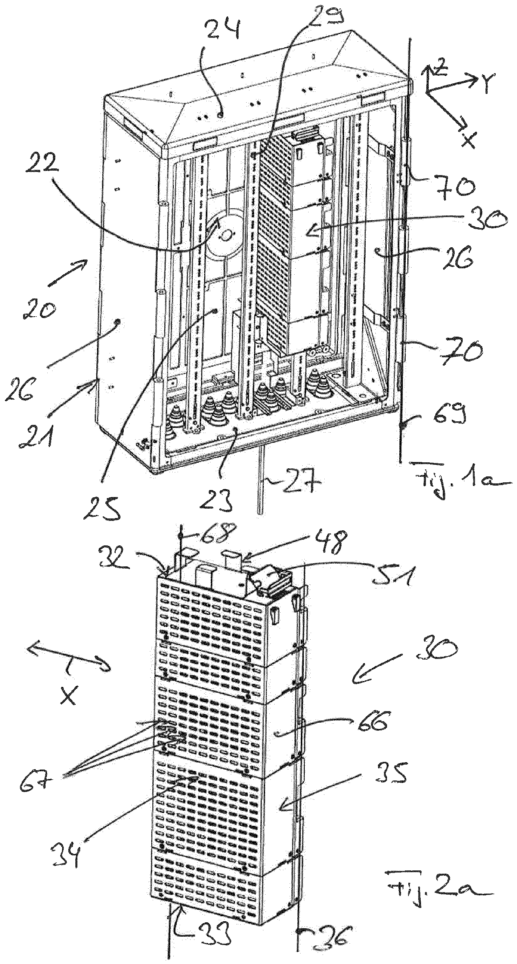

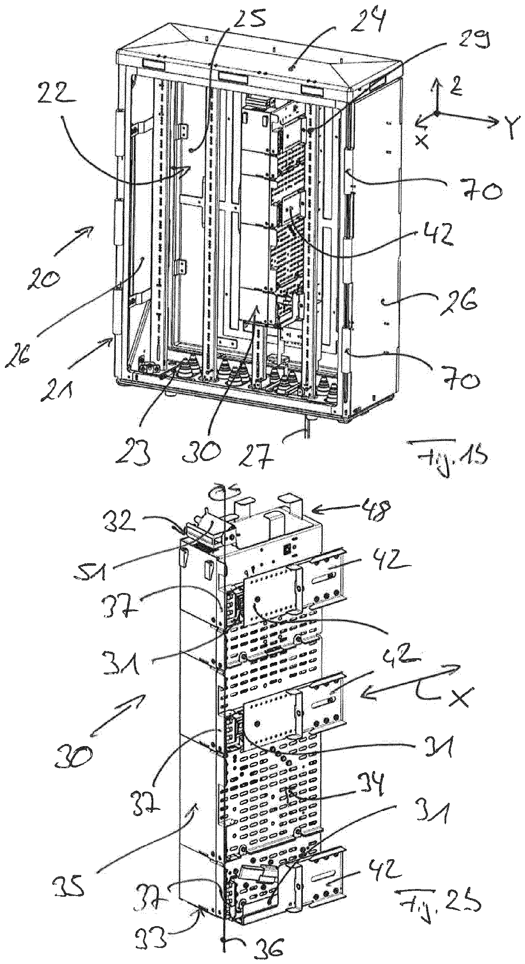

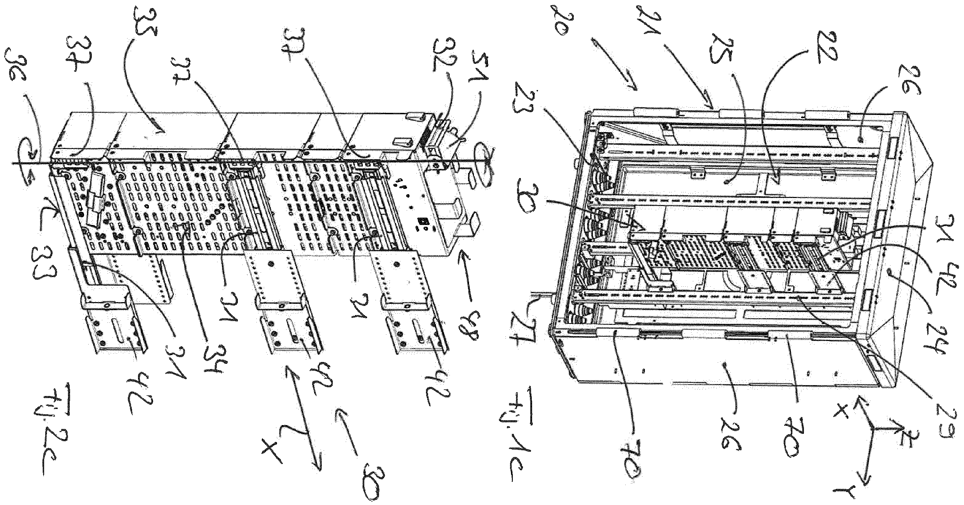

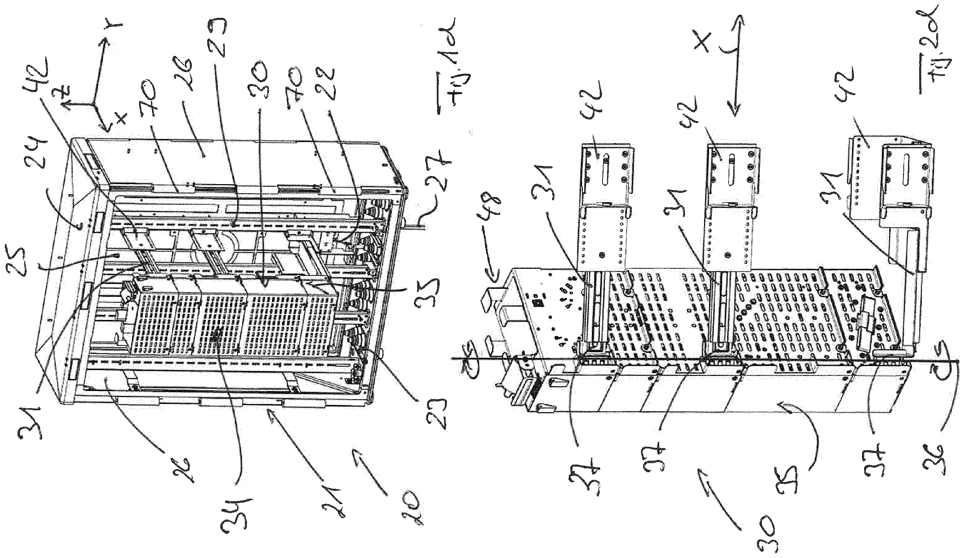

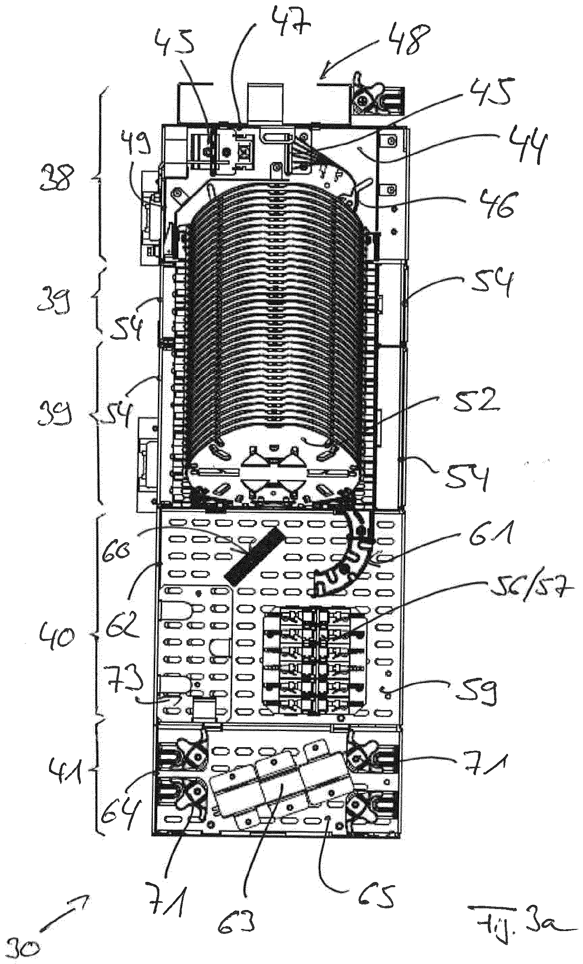

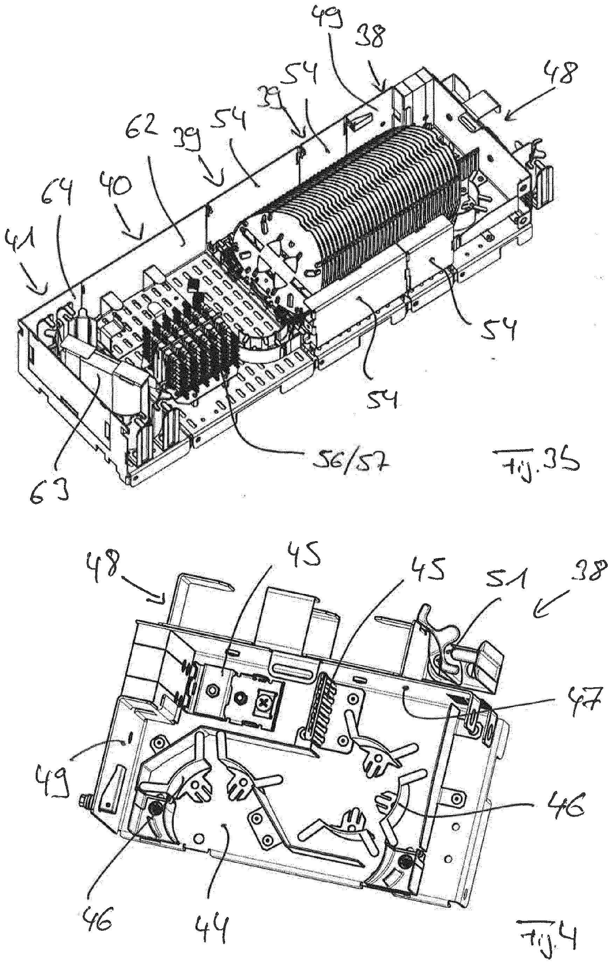

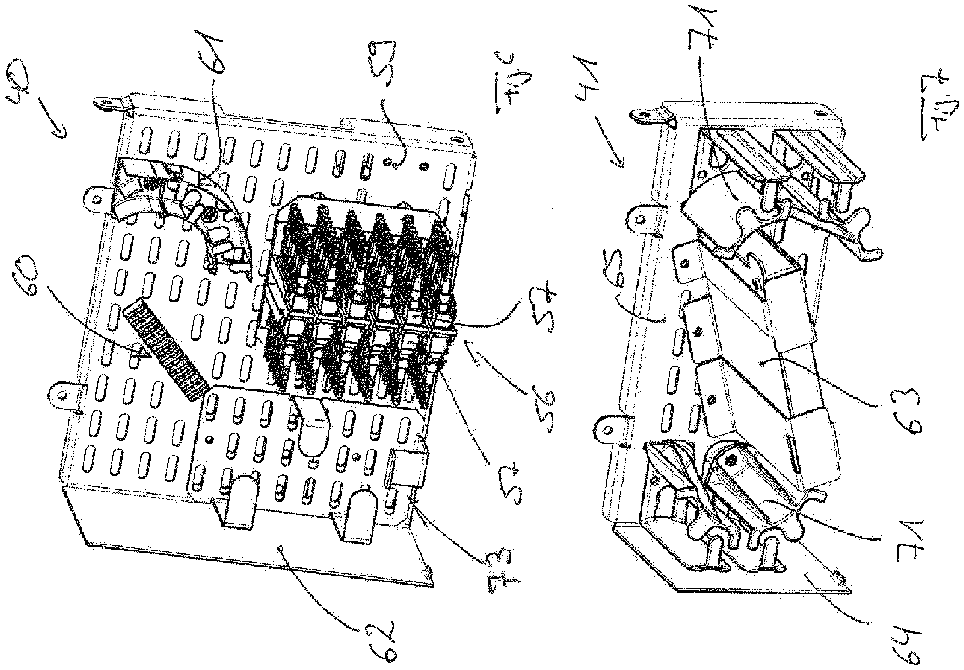

The present patent application relates to a fiber optic distribution device. The fiber optic distribution device can be designed as a street cabinet used to handle/accommodate optical fibers and connections/junctions between optical fibers outside of buildings. The fiber optic distribution device can also be designed as a distribution cabinet or distribution frame used to handle optical fibers and connections between the same inside of buildings. Figures 1a, 1b, 1c and 1d show details of a fiber optic distribution device designed as a street cabinet and of a fiber optic management unit positioned inside the fiber optic distribution device. Figures 2a, 2b, 2c, 2d and 3a to 7 show details of a fiber optic management unit.

The fiber optic distribution device 20 shown in Figure 1a, 1b, 1c, 1d comprises a housing 21 defining an interior space 22 of the fiber optic distribution device 20. The housing 21 is provided by a bottom wall 23, a top wall 24, a back wall 25, side walls 26 and a cover (not shown) hinged to one of the side walls 26 by hinges 70. The cover can be pivoted around a vertical axis 69 defined by the hinges 70 allowing to open and close the fiber optic distribution device 20. At least one fiber optic cable 27 can be inserted from the exterior into the interior space 22 of the housing 21 and passed out from the interior space 22 of the housing 21 to the exterior. The or each fiber optic cable 27 can be inserted into the interior space 22 and passed out from the interior space 22 through openings (not shown) in the bottom wall 23 in vertical direction Z. The vertical direction Z runs in the direction of to the height of the fiber optic distribution device 20.

The fiber optic distribution device 20 comprises at least one modular fiber optic management unit 30 mounted in the housing 21 of the fiber optic distribution device 20. Each fiber optic management unit 30 is positioned between two vertical mounting bars 29 of the housing 21. Each fiber optic management unit 30 is mounted to one of said two vertical mounting bars 29 of the housing 21 of the fiber optic distribution device 20 using mounting brackets 42 and horizontal mounting rails 31.

The mounting rails 31 allow the respective fiber optic management unit 30 to be horizontally pulled out from the interior space 22 of the housing 21 or horizontally pushed into the interior space 22 of the housing 21 in a horizontal direction X. The horizontal direction X runs in the direction of to the depth of the fiber optic distribution device 20. The remaining horizontal direction Y runs in the direction of to the width of the fiber optic distribution device 20.

The respective fiber optic management unit 30 comprises a top side 32, a bottom side 33, two opposite long sides 34 and two opposite narrow sides 35. In a first orientation (see Figures 1a, 2a, 1b, 2b, 1c, 2c) of an upright position of the respective fiber optic management unit 30, the opposite long sides 34 of the respective fiber optic management unit 30 run parallel to horizontal direction X. In a second orientation (see Figures 1d, 2d) of the upright position of the respective fiber optic management unit 30, the opposite long sides 34 of the respective fiber optic management unit 30 run perpendicular to the horizontal direction X.

The mounting rails 31 used to mount the respective fiber optic management unit 30 in the housing 21 of the fiber optic distribution device 20 run in horizontal direction X. The same allow the respective fiber optic management unit 30 to be horizontally pulled out from the interior space 22 of the housing 21 and to be horizontally pushed into the interior space 22 of the housing 21 when the respective fiber optic management unit 30 is in said first orientation of the upright position.

Figures 1a, 2a, 1b, 2b show the respective fiber optic management unit 30 in the pushed in upright position and Figure 1c, 2c shows the respective fiber optic management unit 30 in the pulled out upright position.

At least one first mounting rail 31 is attached to one of the long sides 34 of the respective fiber optic management unit 30. At least one second mounting rail 31 is attached to the bottom side 33 or to the lower end of said long side 34 of the respective fiber optic management unit 30. In the shown embodiment two first mounting rails 31 are attached to one of the long sides 34 and one second mounting rail 31 is attached also to said long side 34 of the respective fiber optic management unit 30, namely to a lower end of said long side 34.

The respective fiber optic management unit 30 being pulled out from the interior space 22 of the housing 21 can be pivoted around a vertical rotation axis 36 from said first orientation (see Figure 1c, 2c) into said second orientation (see Figure 1d, 2d) and vice versa from said second orientation into said first orientation while maintaining the upright position of the same (see arrow in Figures 2c, 2d).

Each of the mounting rails 31 provides at the end at which the respective mounting rail 31 is attached to the long side 34 a hinge 37, namely the or each first mounting rail 31 provides a first hinge 37 and the or each second mounting rail 31 provides a second hinge 37.

The hinges 37 define the vertical rotation axis 36 for pivoting the respective fiber optic management unit 30 between the first orientation of the upright position and the second orientation of the upright position when the respective fiber optic management unit 30 is pulled out from the interior space 22 of the housing 21.

The or each second mounting rail 31 being attached to the bottom side 33 or to the lower end of the long side 34 of the respective fiber optic management unit 30 is useful to avoid a tilting of the respective fiber optic management unit 30 around a horizontal axis when the same is pivoted around the vertical axis 36 from of the first orientation into said second orientation thereby maintaining the upright position of the respective fiber optic management unit 30 in the second orientation of the same.

As mentioned above, the fiber optic distribution device 20 comprises at least one modular fiber optic management unit 30 mounted in the housing 21. Each fiber optic management unit 30 comprises several modules 38, 39, 40, 41 stacked above each other.

Each fiber optic management unit 30 comprises a cable entry module 38 for inserting at least one incoming fiber optic cable (not shown) from the interior space 22 of the housing 21 of the fiber optic distribution device 20 into the respective fiber optic management unit 30 and for passing out least one outgoing fiber optic cable (not shown) from the respective fiber optic management unit 30 in the interior space 22 of the housing 21 of the fiber optic distribution device 20.

The cable entry module 38 provides an upper module or top module of the respective fiber optic management unit 30. The cable entry module 38 of the respective fiber optic management unit 30 comprises a back wall 44 carrying strain relief elements 45 and fiber guide elements 46, a top wall 47 carrying an over-length storage unit 48, and at least one side wall 49. The incoming fiber optic cable (not shown) is insertable into the respective fiber optic management unit 30 through the side wall 49. A first strain relief element 45 provides strain relief for the incoming fiber optic cable (not shown), while a second strain relief element 45 provides strain relief for fiber bundles (not shown) furcated from the incoming fiber optic cable. The fiber guide elements 46 guide the fiber bundles within the cable entry module 38.

The over-length storage unit 48 positioned on top of the cable entry module 38, namely above the top wall 47 of the cable entry module 38, serves for storing over-length of the or each outgoing fiber optic cable (not shown). The over-length storage unit 48 of the cable entry module 38 comprises a curved side wall 51 acting as bent control means for the or each outgoing fiber optic cable.

Each fiber optic management unit 30 comprises further at least one splice module 39. The or each splice module 39 is positioned below the cable entry module 38. The or each splice module 39 comprises several splice trays 52 for handling splice connections preferably between fibers of the or each incoming fiber optic cable and fibers of fiber optic pigtails (not shown).

In the shown embodiment, the fiber optic management unit 30 comprises two splice modules 39 each having several splice trays 52, wherein the number of several splice trays 52 of these splice module 39 can be identical or different.

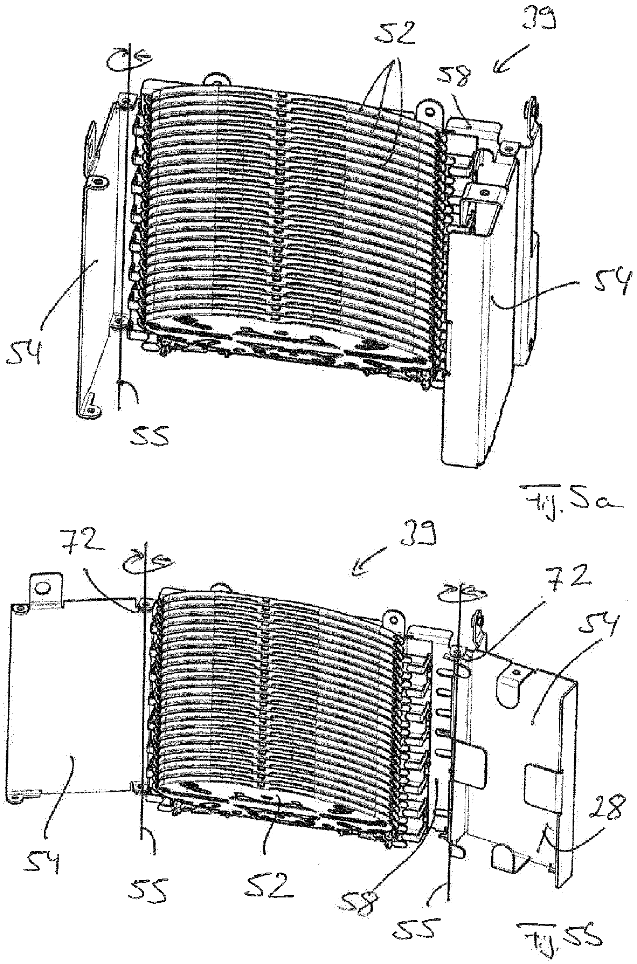

Each splice module 39 of the respective fiber optic management unit 30 comprises a back wall 58 carrying the splice trays 52 and hinged side walls 54. Each side wall 54 is mounted to one side of the back wall 58 of the respective splice module 39 through hinges 72, wherein each side wall 54 can be pivoted around a vertical axis 55 (see Figures 5a and 5b) defined by the respective hinge 72 between a first position in which the side walls 54 run generally perpendicular (see Figure 5a) to the back wall 58 and a second position in which the side walls 54 run generally parallel (see Figure 5b) to the back wall 58. This provides excellent access to the splice trays 52 in the field.

At least one of said hinged side walls 54 (see Figure 5b) provides over-length storage for the or each outgoing fiber optic cable. In the shown embodiment, one hinged side wall 54 serves as an over-length storage unit 28 for the or each outgoing fiber optic cable.

Preferably, each fiber optic management unit 30 comprises further at least one patch module 40. The or each patch module 40 is positioned below the or each splice module 39. The or each patch module 40 comprises a patch field 56 having several fiber optic adapters 57 for handling patch connections between fibers of the fiber optic pigtails (not shown) and fibers of the or each outgoing fiber optic cable (not shown).

Each patch module 40 of the respective fiber optic management unit 30 comprises a back wall 59 carrying the patch field 56 and thereby the fiber optic adapters 57, strain relief elements 60, fiber guide elements 61 and over-length storage elements 73. The strain relief elements 60 provide strain relief for the fiber optic pigtails (not shown) running between the splice trays 52 of the respective splice module 39 and the patch filed 56 of the respective patch module 40. The fiber guide elements 61 guide the fiber optic pigtails in the region of the respective patch module 40. Each patch module 40 of the respective fiber optic management unit 30 comprises further at least one side wall 62.

In the shown embodiment, the fiber optic management unit 30 comprises further a WDM module 41 positioned below the or each splice module and the or each patch module 40. The WDM module 41 comprises a wave division multiplexing filter 63. The WDM module 41 comprises a back wall 65 carrying the wave division multiplexing filter 63 and fiber guide elements 71. The guide elements 71 can be used over over-length storage. The WDM module 41 further comprises at least one side wall 64.

In the shown embodiment, the entry module 38, the patch module 40 and the WDM module 41 each comprise one side wall 49, 62, 64 fixedly attached to the back wall 44, 59, 65 of the respective module 38, 40, 41 in such a way that when the modules 38, 40, 41 are stacked above each other, the side wall 49, 62, 64 are positioned at the same side of the respective fiber optic management unit 30. The splice modules 39 each comprise two hinged side walls 54.

When the modules 38, 39, 40, 41 of the respective fiber optic management unit 30 are stacked above each other, adjacent modules 38, 39, 40, 41 are connected at their back walls 44, 58, 59, 65.

This connection can be accomplished by screwing the back walls 44, 58, 59, 65 of adjacent modules 38, 39, 40, 41 together. Another way to connect the back walls 44, 58, 59, 65 of adjacent modules 38, 39, 40, 41 can accomplished by tool-less snap in connections.

Each fiber optic management unit 30 further comprises a cover 66 with ventilation openings 67, the cover 66 being pivotable around a vertical rotation axis 68.

Each fiber optic management unit 30 can be pre-configured in the plant according the customer requests or will consist at least of a cable entry module 38 and a splice module 39 as starter configuration. Preferably, the starter configuration of the fiber optic management unit 30 comprises further a patch module 40.

The field installer will mount the mounting rails 31 providing the slide-out/slide-in functionality, which are part of the respective fiber optic management unit 30, with the universal mounting bars 29 inside the fiber optic distribution device 20.

The fiber optic cables 27 are be guided from the bottom wall 23 of the in the fiber optic distribution device 20 to the fiber optic management units 30.

For best access to the fibers and fiber connections the fiber optic management units 30 will slide in horizontal direction X out of the interior space 22 of the housing of the fiber optic distribution device 20 and will be pivoted around the axis 36.

The fibers will be routed to the splice trays 52. To improve accessibility the side walls 54 of the splice modules 39 are hinged and can be opened.

The fibers of the incoming cable will be spliced to an outgoing cable or to the pigtails. In case of pigtails, the pigtails will be guided to the patch module 40. On the patch module 40 an integrated over length storage will handle the pigtail over length and guide the pigtails to the adapters 57 where the incoming cable 42 will be connected to the outgoing cables.

From the patch module 40 the outgoing cables will be guided back to the splice module 39 using one of the hinged side walls 54 as over-length storage. The over-length storage tray 48 compensates the length differences due to the slide out function.

After installation, the protective cover 66 will be closed. The closing will be done by fast locking levers. Then the fiber optic management unit 30 will be slide back into the final park position within the interior space 22 of the housing of the fiber optic distribution device 20.

### List of reference numerals

- 20: fiber optic distribution device
- 21: housing
- 22: interior space
- 23: bottom wall
- 24: top wall
- 25: back wall
- 26: side wall
- 27: fiber optic cable
- 28: over-length storage unit
- 29: mounting bar
- 30: fiber optic management unit
- 31: mounting rail
- 32: top side
- 33: bottom side
- 34: long side
- 35: narrow side
- 36: vertical axis
- 37: hinge
- 38: cable entry module
- 39: splice module
- 40: patch module
- 41: WDM module
- 42: mounting bracket
- 44: back wall
- 45: strain relief element
- 46: fiber guide element
- 47: top wall
- 48: over-length storage tray
- 49: side wall
- 50: fiber bundle
- 51: side wall
- 52: splice tray
- 54: side wall
- 55: vertical axis
- 56: patch field
- 57: fiber optic adapters
- 58: back wall
- 59: back wall
- 60: strain relief element
- 61: fiber guide element
- 62: side wall
- 63: wave division multiplexing filter
- 64: side wall
- 65: back wall
- 66: cover
- 67: ventilation openings
- 68: vertical axis
- 69: vertical axis
- 70: hinge
- 71: fiber guide element
- 72: hinge
- 73: over-length storage element

## Claims

1. A fiber optic distribution device (20), comprising:
a housing (21) defining an interior space (22) of the fiber optic distribution device (20), wherein at least one fiber optic cable (27) can be inserted from an exterior into the interior space (22) of the housing (21) and passed out from the interior space (22) of the housing (21) in the exterior; and
at least one modular fiber optic management unit (30) mounted in the housing (21), wherein the or each modular fiber optic management unit (30) comprises several modules stacked above each other, namely at least
a cable entry module (38) for inserting at least one incoming fiber optic cable from the interior space (22) of the housing (21) into the respective fiber optic management unit (30) and for passing out least one outgoing fiber optic cable from the respective fiber optic management unit (30) in the interior space (22) of the housing,
at least one splice module (39) comprising several splice trays (52) for handling splice connections between fibers of the or each incoming fiber optic cable and fibers of fiber optic pigtails or fibers of the or each outgoing fiber optic cable,
wherein the or each fiber optic management unit (30) is mounted in the housing (21) through mounting rails (31) in such a way that
the respective fiber optic management unit (30) having a first orientation in an upright position of the same can be horizontally pulled out from the interior space (22) of the housing (21) or horizontally pushed into the interior space (22) of the housing (21) in said first orientation,
the respective fiber optic management unit (30) being pulled out from the interior space (22) of the housing (21) can be pivoted around a vertical rotation axis (36) from said first orientation into a second orientation and vice versa from said second orientation into the first orientation while maintaining the upright position of the same.

2. The fiber optic distribution device of claim 1, **characterized in that** the or each fiber optic management unit (30) comprises a top side (32), a bottom side (33), two opposite long sides (34) and two opposite narrow sides (35);
in the first orientation of the upright position of the respective fiber optic management unit (30) the opposite long sides (34) of the respective fiber optic management unit (30) run almost parallel to the mounting rails (31) and thereby almost parallel to the direction in which the respective fiber optic management unit (30) can be horizontally pulled out from the interior space (22) of the housing (21) or horizontally pushed into the interior space (22) of the housing (21),
in the second orientation of the upright position of the respective fiber optic management unit (30) the opposite long sides (34) of the respective fiber optic management unit (30) run almost perpendicular to the mounting rails (31).

3. The fiber optic distribution device of claim 2, **characterized in that**
at least one first mounting rail (31) is attached to one of the long sides (34) of the respective fiber optic management unit (30),
at least one second mounting rail (31) is attached to the bottom side (33) or to said long side (34) of the fiber optic management unit (30).

4. The fiber optic distribution device of one of claims 1 to 3, **characterized in that** the mounting rails (31) comprise hinges (37), wherein the hinges (37) provide the vertical rotation axis (36) for pivoting the respective fiber optic management unit (30) between the first orientation of the upright position and the second orientation of the upright position when the respective fiber optic management unit (30) is pulled out from the interior space (22) of the housing (21).

5. The fiber optic distribution device of one of claims 1 to 4, **characterized in that** the or each modular fiber optic management unit (30) further comprises at least one patch module (40) comprising a patch field (56) having several fiber optic adapters (57) for handling patch connections between fibers of the fiber optic pigtails and fibers of the or each outgoing fiber optic cable.

6. The fiber optic distribution device of claim 5, **characterized in that** the cable entry module (38) provides a top module of the respective fiber optic management unit (30), that the or each splice module (39) is positioned below the cable entry module (38), and that the or each patch module (40) is positioned below the or each splice module (39).

7. The fiber optic distribution device of one of claims 1 to 6, **characterized in that** the cable entry module (38) of the respective fiber optic management unit (30) comprises an over-length storage unit (48) on top of the cable entry module (38) for storing over-length of the or each outgoing fiber optic cable.

8. The fiber optic distribution device of claim 7, **characterized in that** the over-length storage unit (48) comprises a curved side wall (51) acting as bent control means the or each outgoing fiber optic cable.

9. The fiber optic distribution device of one of claims 1 to 8, **characterized in that** the or each splice module (39) comprises hinged side walls (54), and that at least one of said hinged side walls (54) serves as an over-length storage unit (28) for the or each outgoing fiber optic cable.

10. The fiber optic distribution device of claim 5, 7 and 9, **characterized in that**
the cable entry module (38) of the respective fiber optic management unit (30) comprises a back wall (44) carrying strain relief elements (45) and fiber guide elements (46), a top wall (47) carrying the over-length storage unit (48), and at least one side wall (49);
the or each splice module (39) of the respective fiber optic management unit (30) comprises a back wall (58) carrying the splice trays (52), and the hinged side walls (54),
the or each patch module (40) of the respective fiber optic management unit (30) comprises a back wall (59) carrying the fiber optic adapters (57), strain relief elements (60) and fiber guide elements (61), and at least one side wall (62),
wherein the modules (38, 39, 40, 41) of the respective fiber optic management unit (30) being positioned above each other are connected at their back walls (44, 58, 59, 65).

11. The fiber optic distribution device of one of claims 1 to 10, **characterized in that** the respective fiber optic management unit (30) further comprises a WDM module (41) positioned below the or each splice module (39) comprising a wave division multiplexing filter (62).

12. The fiber optic distribution device of claim 11, **characterized in that** the WDM module (41) comprises a back wall (65) carrying the wave division multiplexing filter (62) and fiber guide elements (71), and at least one side wall (64).

13. The fiber optic distribution device of one of claims 1 to 12, **characterized in that** the respective fiber optic management unit (30) further comprises a cover (66) with ventilation openings (67) being pivotable around a vertical rotation axis (68).

## Patentansprüche

1. Glasfaserverteilungsvorrichtung (20), die Folgendes umfasst:
ein Gehäuse (21), das einen Innenraum (22) der Glasfaserverteilungsvorrichtung (20) definiert, wobei wenigstens ein Glasfaserkabel (27) von einem Außenbereich in den Innenraum (22) des Gehäuses (21) eingeführt und von dem Innenraum (22) des Gehäuses (21) in den Außenbereich herausgeführt werden kann; und
wenigstens eine modulare Glasfaserverwaltungseinheit (30), die in dem Gehäuse (21) montiert ist, wobei die oder jede modulare Glasfaserverwaltungseinheit (30) mehrere übereinander gestapelte Module umfasst, und zwar wenigstens
ein Kabeleingangsmodul (38) zum Einführen von wenigstens einem eingehenden Glasfaserkabel von dem Innenraum (22) des Gehäuses (21) in die jeweilige Glasfaserverwaltungseinheit (30) und zum Herausführen von wenigstens einem ausgehenden Glasfaserkabel von der jeweiligen Glasfaserverwaltungseinheit (30) in den Innenraum (22) des Gehäuses,
wenigstens ein Spleißmodul (39), das mehrere Spleißeinsätze (52) zum Handhaben von Spleißverbindungen zwischen Fasern des oder jedes eingehenden Glasfaserkabels und Fasern von Glasfaser-Pigtails oder Fasern des oder jedes ausgehenden Glasfaserkabels umfasst,
wobei die oder jede Glasfaserverwaltungseinheit (30) in dem Gehäuse (21) durch Montageschienen (31) auf solche Weise montiert ist, dass
die jeweilige Glasfaserverwaltungseinheit (30) mit einer ersten Orientierung in einer aufrechten Position derselben horizontal aus dem Innenraum (22) des Gehäuses (21) herausgezogen oder horizontal in den Innenraum (22) des Gehäuses (21) in der ersten Orientierung hineingeschoben werden kann,
die jeweilige Glasfaserverwaltungseinheit (30), die aus dem Innenraum (22) des Gehäuses (21) herausgezogen ist, um eine vertikale Rotationsachse (36) herum von der ersten Orientierung in eine zweite Orientierung geschwenkt werden kann und umgekehrt von der zweiten Orientierung in die erste Orientierung, während die aufrechte Position derselben beibehalten wird.

2. Glasfaserverteilungsvorrichtung nach Anspruch 1, **dadurch gekennzeichnet, dass**
die oder jede Glasfaserverwaltungseinheit (30) eine Oberseite (32), eine Unterseite (33), zwei gegenüberliegende lange Seiten (34) und zwei gegenüberliegenden schmale Seiten (35) umfasst;
in der ersten Orientierung der aufrechten Position der jeweiligen Glasfaserverwaltungseinheit (30) die gegenüberliegenden langen Seiten (34) der jeweiligen Glasfaserverwaltungseinheit (30) beinahe parallel zu den Montageschienen (31) verlaufen und damit beinahe parallel zu der Richtung, in der die jeweilige Glasfaserverwaltungseinheit (30) horizontal aus dem Innenraum (22) des Gehäuses (21) herausgezogen oder horizontal in den Innenraum (22) des Gehäuses (21) hineingeschoben werden kann,
in der zweiten Orientierung der aufrechten Position der jeweiligen Glasfaserverwaltungseinheit (30) die gegenüberliegenden langen Seiten (34) der jeweiligen Glasfaserverwaltungseinheit (30) beinahe senkrecht zu den Montageschienen (31) verlaufen.

3. Glasfaserverteilungsvorrichtung nach Anspruch 2, **dadurch gekennzeichnet, dass**
wenigstens eine erste Montageschiene (31) an einer der langen Seiten (34) der jeweiligen Glasfaserverwaltungseinheit (30) angebracht ist,
wenigstens eine zweite Montageschiene (31) an der Unterseite (33) oder der langen Seite (34) der Glasfaserverwaltungseinheit (30) angebracht ist.

4. Glasfaserverteilungsvorrichtung nach einem der Ansprüche 1 bis 3, **dadurch gekennzeichnet, dass** die Montageschienen (31) Scharniere (37) umfassen, wobei die Scharniere (37) die vertikale Rotationsachse (36) zum Schwenken der jeweiligen Glasfaserverwaltungseinheit (30) zwischen der ersten Orientierung der aufrechten Position und der zweiten Orientierung der aufrechten Position bereitstellen, wenn die jeweilige Glasfaserverwaltungseinheit (30) aus dem Innenraum (22) des Gehäuses (21) herausgezogen ist.

5. Glasfaserverteilungseinheit nach einem der Ansprüche 1 bis 4, **dadurch gekennzeichnet, dass** die oder jede modulare Glasfaserverwaltungseinheit (30) ferner wenigstens ein Patch-Modul (40) umfasst, das ein Patch-Feld (56) mit mehreren Glasfaseradaptern (57) zum Handhaben von Patch-Verbindungen zwischen Fasern der Glasfaser-Pigtails und Fasern des oder jedes ausgehenden Glasfaserkabels umfasst.

6. Glasfaserverteilungsvorrichtung nach Anspruch 5, **dadurch gekennzeichnet, dass** das Kabeleingangsmodul (38) ein oberes Modul der jeweiligen Glasfaserverwaltungseinheit (30) bereitstellt, dass das oder jedes Spleißmodul (39) unterhalb des Kabeleingangsmoduls (38) positioniert ist, und dass das oder jedes Patch-Modul (40) unterhalb des oder jedes Spleißmoduls (39) positioniert ist.

7. Glasfaserverteilungsvorrichtung nach einem der Ansprüche 1 bis 6, **dadurch gekennzeichnet, dass** das Kabeleingangsmodul (38) der jeweiligen Glasfaserverwaltungseinheit (30) eine Überlängenaufbewahrungseinheit (48) oben auf dem Kabeleingangsmodul (38) zum Aufbewahren von Überlänge des oder jedes ausgehenden Glasfaserkabels umfasst.

8. Glasfaserverteilungsvorrichtung nach Anspruch 7, **dadurch gekennzeichnet, dass** die Überlängenaufbewahrungseinheit (48) eine gekrümmte Seitenwand (51) umfasst, die als Biegesteuerungsmittel für das oder jedes ausgehende Glasfaserkabel fungiert.

9. Glasfaserverteilungsvorrichtung nach einem der Ansprüche 1 bis 8, **dadurch gekennzeichnet, dass** das oder jedes Spleißmodul (39) aufklappbare Seitenwände (54) umfasst, und dass wenigstens eine der aufklappbaren Seitenwände (54) als eine Überlangenaufbewahrungseinheit (28) für das oder jedes ausgehende Glasfaserkabel dient.

10. Glasfaserverteilungsvorrichtung nach Anspruch 5, 7 und 9, **dadurch gekennzeichnet, dass**
das Kabeleingangsmodul (38) der jeweiligen Glasfaserverwaltungseinheit (30) eine Rückwand (44), die Zugentlastungselemente (45) und Faserführungselemente (46) trägt, eine Oberwand (47), die die Überlängenaufbewahrungseinheit (48) trägt, und wenigstens eine Seitenwand (49) umfasst;
das oder jedes Spleißmodul (39) der jeweiligen Glasfaserverwaltungseinheit (30) eine Rückwand (58), die die Spleißeinsätze (52) trägt, und die aufklappbaren Seitenwände (54) umfasst,
das oder jedes Patch-Modul (40) der jeweiligen Glasfaserverwaltungseinheit (30) eine Rückwand (59), die die Glasfaseradapter (57), Zugentlastungselemente (60) und Faserführungselemente (61) trägt, und wenigstens eine Seitenwand (62) umfasst,
wobei die Module (38, 39, 40, 41) der jeweiligen Glasfaserverwaltungseinheit (30), die übereinander positioniert sind, an ihren Rückwänden (44, 58, 59, 65) verbunden sind.

11. Glasfaserverteilungsvorrichtung nach einem der Ansprüche 1 bis 10, **dadurch gekennzeichnet, dass** die jeweilige Glasfaserverwaltungseinheit (30) ferner ein unterhalb des oder jedes Spleißmoduls (39) positioniertes WDM-Modul (41) umfasst, das einen Wellenlängenmultiplexfilter (62) umfasst.

12. Glasfaserverteilungsvorrichtung nach Anspruch 11, **dadurch gekennzeichnet, dass** das WDM-Modul (41) eine Rückwand (65), die den Wellenlängenmultiplexfilter (62) und Faserführungselemente (71) trägt, und wenigstens eine Seitenwand (64) umfasst.

13. Glasfaserverteilungsvorrichtung nach einem der Ansprüche 1 bis 12, **dadurch gekennzeichnet, dass** die jeweilige Glasfaserverwaltungseinheit (30) ferner eine Abdeckung (66) mit Belüftungsöffnungen (67) umfasst, die um eine vertikale Rotationsachse (68) herum schwenkbar ist.

## Revendications

1. Dispositif de distribution à fibres optiques (20), comprenant :
un boîtier (21) définissant un espace intérieur (22) du dispositif de distribution à fibres optiques (20), où au moins un câble à fibre optique (27) peut être inséré depuis l'extérieur dans l'espace intérieur (22) du boîtier (21) et passé hors de l'espace intérieur (22) du boîtier (21) à l'extérieur ; et
au moins une unité de gestion de fibres optiques modulaire (30) montés dans le boîtier (21), où la ou chaque unité de gestion de fibres optiques modulaire (30) comprend plusieurs modules empilés les uns au-dessus des autres, à savoir au moins
un module d'entrée de câble (38) pour insérer au moins un câble à fibre optique entrant depuis l'espace intérieur (22) du boîtier (21) dans l'unité de gestion de fibres optiques respective (30) et pour passer au moins un câble à fibre optique sortant de l'unité de gestion de fibres optiques respective (30) dans l'espace intérieur (22) du boîtier,
au moins un module d'épissure (39) comprenant plusieurs cassettes d'épissure (52) pour gérer les épissures de raccordement entre les fibres du ou de chaque câble à fibre optique entrant et des fibres de nattes de fibres optiques ou des fibres du ou de chaque câble à fibre optique sortant,
où la ou chaque unité de gestion de fibres optiques (30) est montée dans le boîtier (21) par l'intermédiaire de rails de montage (31) d'une manière telle que
l'unité de gestion de fibres optiques (30) respective ayant une première orientation dans une position verticale de celle-ci peut être tirée horizontalement hors de l'espace intérieur (22) du boîtier (21) ou poussée horizontalement dans l'espace intérieur (22) du boîtier (21) dans ladite première orientation,
l'unité de gestion de fibres optiques (30) respective étant tirée hors de l'espace intérieur (22) du boîtier (21) peut être tournée autour d'un axe de rotation vertical (36) depuis ladite première orientation dans une seconde orientation, et inversement depuis ladite seconde orientation dans la première orientation, tout en maintenant la position verticale de celle-ci.

2. Dispositif de distribution à fibres optiques selon la revendication 1, **caractérisé en ce que**
la ou chaque unité de gestion de fibres optiques (30) comprend une face supérieure (32), une face inférieure (33), deux côtés longs opposés (34) et deux côtés étroits opposés (35) ;
dans la première orientation de la position verticale de l'unité de gestion de fibres optiques respective (30), les côtés longs opposés (34) de l'unité de gestion de fibres optiques respective (30) s'étendent presque parallèlement aux rails de montage (31) et, ainsi, presque parallèlement à la direction dans laquelle l'unité de gestion de fibres optiques (30) respective peut être tirée horizontalement hors de l'espace intérieur (22) du boîtier (21) ou peut être poussée horizontalement dans l'espace intérieur (22) du boîtier (21),
dans la seconde orientation de la position verticale de l'unité de gestion de fibres optiques respective (30), les côtés longs opposés (34) de l'unité de gestion de fibres optiques respective (30) s'étendent presque perpendiculairement aux rails de montage (31).

3. Dispositif de distribution à fibres optiques selon la revendication 2, **caractérisé en ce que**
au moins un premier rail de montage (31) est fixé à l'un des côtés longs (34) de l'unité de gestion de fibres optiques respective (30),
au moins un second rail de montage (31) est fixé au côté inférieur (33) ou audit côté long (34) de l'unité de gestion de fibres optiques (30).

4. Dispositif de distribution de fibres optiques selon l'une des revendications 1 à 3, **caractérisé en ce que** les rails de montage (31) comprennent des charnières (37), où les charnières (37) fournissent l'axe de rotation vertical (36) pour faire pivoter l'unité de gestion de fibres optiques respective (30) entre la première orientation de la position verticale et la seconde orientation de la position verticale lorsque l'unité de gestion de fibres optiques respective (30) est tirée hors de l'espace intérieur (22) du boîtier (21).

5. Dispositif de distribution à fibres optiques selon l'une des revendications 1 à 4, **caractérisé en ce que** la ou chaque unité de gestion de fibres optiques modulaire (30) comprend en outre au moins un module de brassage (40) comprenant un tableau de brassage (56) ayant plusieurs adaptateurs à fibre optique (57) pour gérer les connexions de raccordement entre les fibres des nattes de fibres optiques et les fibres du ou de chaque câble à fibre optique sortant.

6. Dispositif de distribution à fibres optiques selon la revendication 5, **caractérisé en ce que** le module d'entrée de câble (38) fournit un module supérieur de l'unité de gestion de fibres optiques respective (30), **en ce que** le ou chaque module d'épissure (39) est positionné au-dessous du module d'entrée de câble (38), et **en ce que** le ou chaque module de brassage (40) est positionné au-dessous du ou de chaque module d'épissure (39).

7. Dispositif de distribution à fibres optiques selon l'une des revendications 1 à 6, **caractérisé en ce que** le module d'entrée de câble (38) de l'unité de gestion de fibres optiques respective (30) comprend une unité de stockage de longueur excédentaire (48) au-dessus du module d'entrée de câble (38) destinée à stocker la longueur excédentaire du ou de chaque câble à fibre optique sortant.

8. Dispositif de distribution à fibres optiques selon la revendication 7, **caractérisé en ce que** l'unité de stockage de longueur excédentaire (48) comprend une paroi latérale incurvée (51) agissant comme moyen de contrôle de courbure du ou de chaque à fibre optique sortant.

9. Dispositif de distribution à fibres optiques selon une des revendications 1 à 8, **caractérisé en ce que** le ou chaque module d'épissure (39) comprend des parois latérales articulées (54), et **en ce qu'**au moins une desdites parois latérales articulées (54) sert d'unité de stockage de longueur excédentaire (28) pour le ou chaque câble à fibre optique sortant.

10. Dispositif de distribution à fibres optiques selon les revendications 5, 7 et 9, **caractérisé en ce que**
le module d'entrée de câble (38) de l'unité de gestion de fibres optiques respective (30) comprend une paroi arrière (44) portant des éléments de soulagement de traction (45) et des éléments de guidage de fibres (46), une paroi supérieure (47) portant l'unité de stockage de longueur excédentaire (48) et au moins une paroi latérale (49) ;
le ou chaque module d'épissure (39) de l'unité de gestion de fibres optiques respective (30) comprend une paroi arrière (58) portant les cassettes d'épissure (52) et les parois latérales articulées (54),
le ou chaque module de brassage (40) de l'unité de gestion de fibres optiques respective (30) comprend une paroi arrière (59) portant les adaptateurs de fibres optiques (57), des éléments de soulagement de traction (60) et des éléments de guidage de fibres (61), et au moins une paroi latérale (62),
où les modules (38, 39, 40, 41) de l'unité de gestion de fibres optiques respective (30) étant positionnés les uns au-dessus des autres sont connectés au niveau de leurs parois arrières (44, 58, 59, 65).

11. Dispositif de distribution à fibres optiques selon une des revendications 1 à 10, **caractérisé en ce que** l'unité de gestion de fibres optiques respective (30) comprend en outre un module WDM (41) positionné au-dessous du ou de chaque module d'épissure (39) comprenant un filtre de multiplexage par répartition en longueurs d'onde (62).

12. Dispositif de distribution à fibres optiques selon la revendication 11, **caractérisé en ce que** le module WDM (41) comprend une paroi arrière (65) supportant le filtre de multiplexage par répartition en longueurs d'onde (62) et des éléments de guidage de fibres (71), et au moins une paroi latérale (64).

13. Dispositif de distribution à fibres optiques selon l'une quelconque des revendications 1 à 12, **caractérisé en ce que** l'unité de gestion de fibres optiques respective (30) comprend en outre un couvercle (66) avec des ouvertures de ventilation (67) pouvant pivoter autour d'un axe de rotation vertical (68).
